Europäisches Patentamt

European Patent Office

Office européen des brevets

(19)

(11) **EP 0 918 985 B1**

(12) **FASCICULE DE BREVET EUROPEEN**

| | |
|---|---|
| (45) Date de publication et mention de la délivrance du brevet:<br>**22.10.2003 Bulletin 2003/43** | (51) Int Cl.⁷: **G01N 27/12** |
| (21) Numéro de dépôt: **97936531.9** | (86) Numéro de dépôt international:<br>**PCT/BE97/00093** |
| (22) Date de dépôt: **19.08.1997** | (87) Numéro de publication internationale:<br>**WO 98/008084 (26.02.1998 Gazette 1998/08)** |

(54) **PROCEDE DE FABRICATION D'UN ELEMENT FORME DE SEMI-CONDUCTEUR(S) ET DETECTEUR D'INCENDIE COMPRENANT UN TEL ELEMENT**

HERSTELLUNGSVERFAHREN VON EINEM AUS HALBLEITER BESTEHENDEN ELEMENT UND BRANDMELDER MIT SOLCH EINEM ELEMENT

METHOD FOR MANUFACTURING AN ELEMENT FORMED WITH SEMICONDUCTOR(S) AND FIRE DETECTOR COMPRISING SUCH AN ELEMENT

| | |
|---|---|
| (84) Etats contractants désignés:<br>**BE CH DE FR GB LI NL** | (74) Mandataire: **Quintelier, Claude et al**<br>**Gevers & Vander Haeghen,**<br>**Intellectual Property House,**<br>**Brussels Airport Business Park**<br>**Holidaystraat 5**<br>**1831 Diegem (BE)** |
| (30) Priorité: **19.08.1996 BE 9600704** | |
| (43) Date de publication de la demande:<br>**02.06.1999 Bulletin 1999/22** | (56) Documents cités:<br>**EP-A- 0 140 340      WO-A-95/05595**<br>**DE-A- 3 836 819      FR-A- 2 383 440**<br>**GB-A- 2 022 837** |
| (73) Titulaire: **De Haan, André**<br>**B-7000 Mons (BE)** | |
| (72) Inventeur: **De Haan, André**<br>**B-7000 Mons (BE)** | |

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention concerne un procédé de fabrication d'un élément formé de semi-conducteur(s) permettant la détection d'incendie, suivant lequel on applique par évaporation sous vide une couche (3 ;7) de phtalocyanine sur un substrat isolant (1 ;4 ;15), laquelle couche est solidifiée de telle façon à obtenir en surface de l'élément semi-conducteur des sites accepteurs et des sites donneurs dans une proportion telle pour permettre la détection de feu avec et sans flamme.

Un tel procédé est connu de la demande de brevet français n° 2.383.440. Suivant le procédé connu, on prépare un mélange de poudres semi-conductrices composé de métallo-phtalocyanines. Ces poudres sont appliquées sur un substrat isolant par évaporation sous vide afin de former un film d'éléments semi-conducteurs. Le substrat est également complété en y ajoutant les contacts électriques nécessaires. L'élément peut alors être monté dans un circuit électrique pour la détection d'incendie.

Pour les phtalocyanines, il est bien connu que certains sites actifs sont porteurs d'une polarité électrique légèrement positive. Ces sites accepteurs sont situés au centre des molécules de phtalocyanines au niveau de l'atome métallique. Par contre d'autres sites se situent à la périphérie au niveau des atomes d'azote et sont porteurs d'une polarité négative.

Lorsque le dépôt de la couche de phtalocyanines est réalisé par évaporation sous vide, un désavantage connu du procédé est que la surface active d'un film formant la couche semi-conductrice correspond à sa géométrie réelle ce qui diminue déjà fortement le nombre de sites actifs empêchant ainsi les gaz d'accéder à l'un des types de sites réactionnels des molécules de phtalocyanine et donc de détecter les feux sans flamme.

Le brevet américain 4.381.440 décrit également l'application de la phtalocyanine par peinture d'une poudre dispersée dans un solvant. Lorsque les éléments formés de semi-conducteurs sont obtenus de cette façon, les deux types de sites actifs sont accessibles de cette façon et on peut détecter les feux avec et sans flamme. Malheureusement, les poudres subissent un frittage dans le temps ce qui réduit progressivement l'accès aux différents types de sites. La sensibilité diminue donc constamment au fur et à mesure que le frittage progresse et à terme les capteurs peuvent devenir complètement insensibles.

La demande de brevet WO 95/05595 décrit également un procédé de fabrication d'un tel élément semi-conducteur. les semi-conducteur peuvent être des oxydes métalliques ou de la phtalocyanine métallique.

Cette demande de brevet décrit l'application de poudres, dont au moins une est une substance semi-conductrice, dispersée dans un solvant sur un substrat isolant Cette suspension est hétérogène où l'état de grain de la substance semi-conductrice est maintenu.

Ce type d'application permet de réduire en partie le frittage des poudres semi-conductrice entre elles.

La demande de brevet DE 3.836.819 A 1 décrit un détecteur de gaz comprenant une couche de phtalocyanine sur un substrat et un moyen de mesurer la conductivité de la couche. Cette couche est continue et principalement cristalline dans sa structure qui est préférentiellement du type β-polymorphe de manière à réduire le temps de réponse du signal à basse température.

L'invention a pour but de réaliser un procédé de fabrication d'un élément formé de semi-conducteur (s) permettant de déstabiliser la cristallisation des films obtenus par évaporation sous vide de manière à permettre aux gaz d'incendie d'atteindre aussi bien les sites actifs donneurs qu'accepteurs des molécules de phtalocyanine et de réduire la perte de sensibilité dans le temps que subissent les capteurs.

A cette fin un procédé de fabrication d'un élément formé de semi-conducteur(s) est caractérisé en ce que durant l'application de ladite couche de phtalocyanine la température du substrat est réglée à une température entre -30 et +80°C, et en ce que l'épaisseur de la couche de phtalocyanine appliquée sur le substrat est située entre 100 Å et 2500 Å, laquelle couche est solidifiée sur le substrat qui possède une surface irrégulière et rugueuse afin d'obtenir une couche de phtalocyanine irrégulière constituée d'agrégats polycristallins présentant des cristallisations aléatoires. A cette température, on obtient des couches de phtalocyanine amorphes, qui présentent une excellente sensibilité puisque dû à la basse température les molécules se déposent de manière aléatoire. En particulier, le refroidissement du substrat à une température inférieure à 0° a pour effet que l'énergie cinétique des molécules de phtalocyanine provenant de l'évaporation de la phtalocyanine est pratiquement immédiatement prélevée lorsque les molécules de phtalocyanine entrent en contact avec le substrat. Les molécules restent ainsi figées dans leur position d'arrivée et ne se réorientent pas dans un réseau cristallin. L'élément formé de semi-conducteur(s) ainsi fabriqué, présente tant des sites donneurs qu'accepteurs, ce qui permet au gaz d'incendie produit avec ou sans flamme de pouvoir en tout état de cause atteindre un site capable de les détecter.

Une première forme de réalisation préférentielle d'un procédé suivant l'invention est caractérisée en ce que l'évaporation sous vide est réalisée en portant une source de phtalocyanine à une température d'environ 350°C sous un vide d'environ 10⁻⁴ Pa durant une période de temps d'environ 10 minutes. La température détermine essentiellement la vitesse à laquelle la phtalocyanine va sublimer et donc la vitesse de dépôt sur le substrat. Cette vitesse conditionne également la cristallisation du film. Par réglage de la température, la vitesse de cristallisation est ainsi déterminée.

Une deuxième forme de réalisation préférentielle d'un procédé suivant l'invention est caractérisée en ce qu'en tant que couche de phtalocyanine un mélange de phtalocyanine de métaux différents est appliqué. La faible différence de forme et de dimension des molécules de phtalocyanine par exemple de cuivre et de cobalt est suffisante pour déstabiliser le réseau et donner lieu à une croissance polycristalline.

Une troisième forme de réalisation préférentielle d'un procédé suivant l'invention est caractérisée en ce que pour le substrat, un substrat en alumine obtenu par frittage de poudres d'oxyde d'alumine appartenant à des poudres de classes granulométriques différentes, est utilisé. L'utilisation de poudres appartenant à des poudres de classes granulométriques différentes, permet d'obtenir une surface non plane du substrat.

Une quatrième formé de réalisation préférentielle d'un procédé suivant l'invention est caractérisée en ce que le substrat utilisé est un substrat à base de poudres frittées, lequel substrat est imprégné, préalablement à l'application de la phtalocyanine, d'une substance hydrofuge susceptible de polymériser dans les pores résiduels présents après frittage. L'utilisation de substrats à base de poudres frittées telles l'alumine, présentent en effet l'inconvénient de présenter de nombreux pores et interstices entre les grains d'alumine. Lorsque l'humidité de l'atmosphère ambiante augmente aux environs de 70 % d'humidité relative, ces pores peuvent être le siège de condensations capillaires. Dans ces conditions, la résistance électrique du substrat en alumine diminue fortement jusqu'à devenir inférieure à celle de la couche sensible. Ces deux résistances étant disposées en parallèle, c'est dans ce cas la plus faible en l'occurrence celle du substrat qui devient déterminante. Pour éviter cet effet, le substrat est imprégné à l'aide d'une substance hydrofuge susceptible de polymériser dans les pores de l'alumine frittée. Une condensation capillaire ultérieure peut ainsi être évitée.

Une cinquième forme de réalisation préférentielle d'un procédé suivant l'invention est caractérisée en ce que le substrat est un substrat en silicium couvert d'une couche isolante, dont la surface a été rendue poreuse et rugueuse. La valeur résistive intrinsèque des revêtements dont on peut couvrir le silicium le rend particulièrement apte en tant que substrat.

L'invention sera maintenant décrite plus en détail à l'aide de la description reprise ci-dessous. Cette description fait référence à des dessins dans lesquels :

   les figures 1a) et 1b) illustrent l'organisation du film sur substrat lisse;
   les figures 1c) et 1d) illustrent les structures cristallographiques de la phtalocyanine de cuivre;
   les figures 2 et 3 illustrent à échelle agrandie la surface rugueuse et le profil des grains d'un substrat utilisé dans l'application du procédé suivant l'invention;
   la figure 4a + b montre un détail de l'organisation du film de phtalocyanine sur le substrat rugueux;
   la figure 5 illustre un substrat sur lequel une couche trop épaisse a été appliquée;
   la figure 6 illustre un exemple d'un dispositif permettant l'application du procédé suivant l'invention;
   les figures 7 et 8 illustrent à échelle agrandie l'élément formé de semi-conducteurs obtenu par application du procédé suivant l'invention;
   la figure 9 illustre le changement de la résistance de six capteurs soumis à l'ambiance en fonction du temps;
   la figure 10 illustre l'évolution de la pression partielle de la phtalocyanine dans l'évaporation en fonction de la température de la nacelle;
   la figure 11 illustre l'évolution de la résistance électrique des différents composants de l'élément semi-conducteur en fonction de l'humidité relative;
   les figures 12 et 13 illustrent l'évolution de la résistance électrique des différents composants de l'élément semi-conducteur dans le temps lorsqu'un feu sans flamme s'est déclaré.

Dans les dessins, une même référence a été attribuée à un même élément ou à un élément analogue.

Des capteurs, comme par exemple des capteurs pour la détection d'incendie, comportent généralement un élément formé de semi-conducteur(s). Cet élément est formé par un substrat isolant dont la valeur de résistivité spécifique est d'au moins $10^{12}$ Ω cm. Sur ce substrat est appliquée une couche de phtalocyanine.

La phtalocyanine a les propriétés suivantes : dans le vide parfait, elle se comporte comme un isolant et a donc une conductivité quasi nulle. Si elle est mise en contact avec un agent gazeux, il y a adsorption possible de ce gaz en surface, ce qui a une incidence sur sa conductivité et donc sur sa résistance.

Ainsi, lorsque le gaz adsorbé est un accepteur d'électrons tel que $O_2$, $O_3$, $SO_2$, $NO_x$ ..., il y a transfert d'électrons du film vers les molécules adsorbées, le nombre de charges positives de la couche s'accroît et facilite le transfert d'électrons d'une molécule à l'autre, ce qui augmente logiquement la conductivité ou diminue la résistance. C'est ce que l'on observe lorsque l'on place un film de phtalocyanine de cuivre à l'atmosphère : les éléments à caractères accepteurs présents dans l'air ambiant viennent s'adsorber à la surface du film et donnent un caractère semi-conducteur extrinsèque de type p à la phtalocyanine.

Inversement, lorsqu'elle est dans l'air, puis en contact avec un gaz donneur tel le $NH_3$, dans les conditions normales, on observe une diminution de sa conductivité due à l'annulation des effets des gaz accepteurs.

Cette variation de résistance de la phtalocyanine en fonction des gaz en présence peut être mise à profit dans de nombreuses applications domotiques dont la détection incendie.

Ainsi, la phtalocyanine de cuivre (CuPc) permet de distinguer un feu avec flamme d'un feu sans flamme : en effet, lors d'un feu sans flamme, la combustion est incomplète et dégage des gaz à caractères essentiellement donneurs. En s'adsorbant sur le film, ceux-ci vont céder des électrons et diminuer le caractère semi-conducteur extrinsèque de type p que la phtalocyanine possède au contact de l'atmosphère. La conductivité de la phtalocyanine va donc fortement diminuer.

Dans le cas d'un feu avec flamme, par contre, on créera essentiellement des gaz forts oxydés, donc accepteurs, qui vont augmenter le nombre de porteurs de type p de la phtalocyanine en venant s'adsorber sur celle-ci : la conductivité de la couche va alors augmenter.

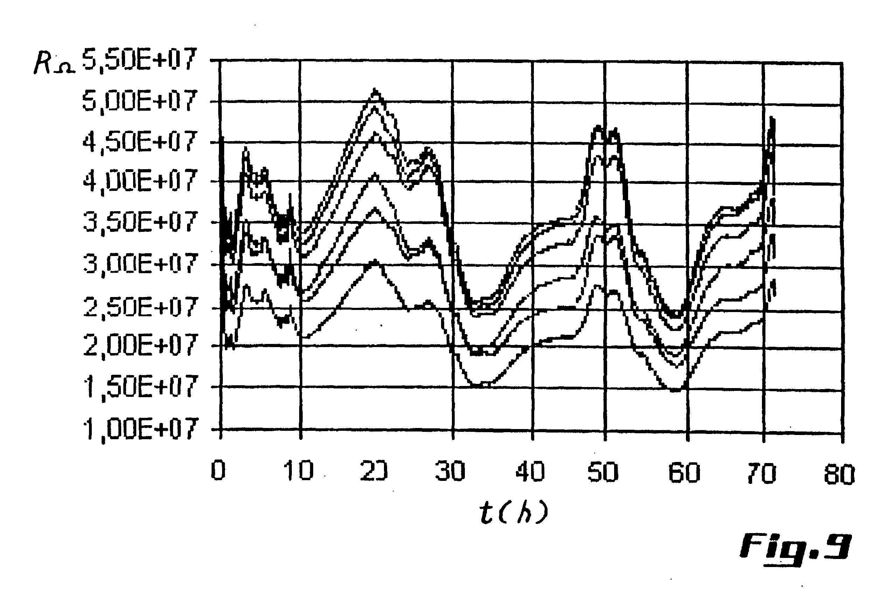

Un capteur d'incendie à base de CuPc placé dans une atmosphère normale, c'est-à-dire sans qu'il y ait de feu, va aussi subir des fluctuations de résistance. En effet, au cours d'une journée, la composition de l'atmosphère varie fortement. De plus, suivant les saisons ou les endroits, les conditions atmosphériques peuvent varier fortement. La composition de l'atmosphère n'est donc pas un paramètre constant, ce qui va donc induire des variations de résistance du capteur. Un exemple de variation, en fonction du temps de la résistance, de six capteurs placés à l'ambiance, est illustré sur la figure 9.

Ces fluctuations assez importantes en amplitude empêchent l'utilisation de seuils de résistance pour le déclenchement d'une alarme en détection d'incendies. De tels seuils peuvent toutefois être utilisés pour les applications domotiques et notamment pour la mise en service d'une ventilation, d'un conditionnement d'air, d'un dispositif de purification d'air ou encore pour signaler la présence d'un polluant majeur. Ces variations naturelles ne peuvent que partiellement être éliminées par l'interposition de filtres spécifiques. Ainsi par exemple on peut utiliser comme filtre pour éliminer l'ozone, une grille imprégnée d'indigo. Dans le cas de la détection incendie, un traitement du signal basé sur la dynamique des phénomènes que l'on souhaite détecter est requis.

C'est dans cette optique qu'a par exemple été défini le «ratio» r caractéristique de l'évolution dynamique du capteur :

$$r = \frac{R(t)}{R(t - 15)}$$

avec

R(t) :       résistance du capteur au temps t
R(t-15) :    résistance du capteur au temps t - 15 sec.

C'est ce ratio r qui permet de déterminer la sensibilité de la couche, le maintien de sa valeur dans le temps permet de caractériser la notion de stabilité.

Ainsi défini, le ratio r donné par un capteur en feu avec flamme sera inférieur ou égal à 0.85, en feu sans flamme supérieur ou égal à 1.25. Ces valeurs ne peuvent jamais être atteintes suite à des fluctuations d'ambiance ( 0.97 < r < 1.06 ).

La technologie connue fait appel à des poudres de phtalocyanine, qui donnent de bons résultats, mais dont l'évolution dans le temps ne peut cependant être maîtrisée. Ainsi, au cours du temps, les poudres ont une tendance à subir un frittage progressif, qui diminue la surface spécifique et donc la surface active réactionnelle. Ce frittage induit une diminution progressive de la sensibilité irrécupérable par l'électronique de commande. Les ratios r se rapprochent donc de 1 au cours du temps.

A terme, ce type de capteur est hors d'usage et ne peut donc pas être utilisé dans des domaines sensibles qui touchent à la sécurité des biens et des personnes telle que la détection d'incendie.

L'utilisation de la phtalocyanine sous forme de «poudres» présente toutefois un avantage considérable, car la surface spécifique est au départ très importante et donc également la sensibilité. En outre, chaque grain constitué d'un ensemble de molécules de phtalocyanine est accessible aux gaz par toutes ses faces. Par conséquent, tous les sites actifs, donneurs et accepteurs, centraux et périphériques des molécules sont accessibles.

Cette accessibilité à tous les sites réactionnels des molécules est extrêmement importante, car elle permet la détection de tous les types de feux avec ou sans flamme. Malheureusement, dans la configuration «poudres» l'évolution dans le temps est telle que la sensibilité se détériore rapidement.

D'autre part, dans des détecteurs connus réalisés sur substrat lisse, la surface active du film correspond à sa surface géométrique réelle, ce qui diminue déjà fortement sa réactivité et donc sa sensibilité. Sur silicium classique et lisse, couvert d'une couche isolante d'oxyde ou d'autres isolants tels le nitrure de silicium, les résultats sont, comme dans les deux cas précédents, fort aléatoires, et tous les types de feux ne sont pas détectés. Ainsi par exemple le ratio r est excellent dans le cas d'un feu avec flamme (r<0,6). Par contre pour un feu couvant sans flamme le ratio (r≅1,1) est moins bon et par conséquent il est plus difficilement détecté, puisque le ratio est proche de celui des fluctuations ambiantes.

Il est d'autre part bien connu que la nature du substrat utilisé en tant que substrat et les conditions d'élaboration du dépôt, ont une grande influence sur la cristallisation des films et donc sur la réactivité des couches sensibles. Ainsi, John D. Wright dans son livre "Progress in surface science" paru chez Maxwell Pergamon Macmillan, décrit dans l'article (Vol. 31 pages 1 à 60) "Gas adsorption and Conductivity of Phthalocyanines" l'influence de ces conditions opératoires sur la nature et la morphologie des films obtenus. Cette étude a été réalisée sur des substrats totalement différents puisqu'il s'agit de muscovite ou de sels alcalins. Les principes de croissance de la couche sont néanmoins apparentés et montrent une très grande importance de la nature de la surface du substrat et des conditions opératoires.

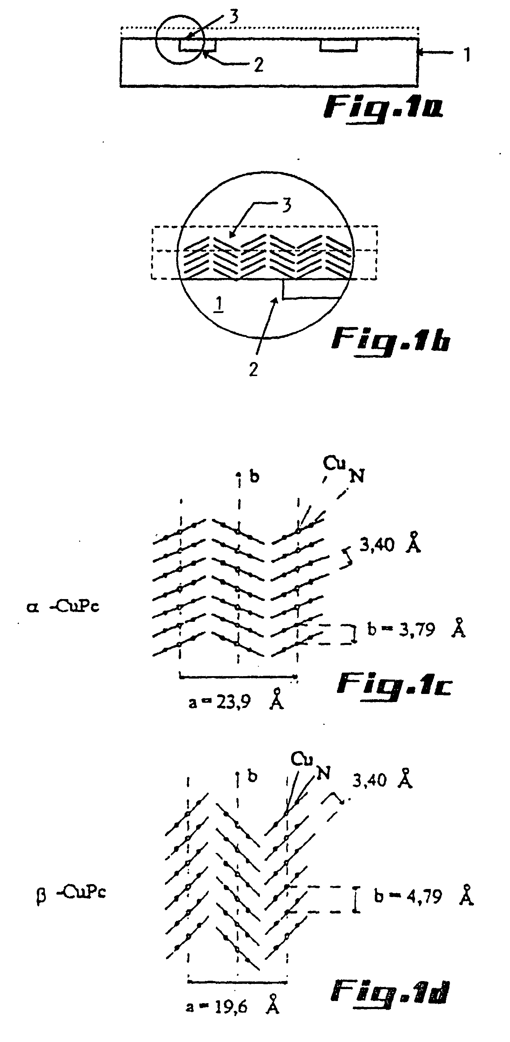

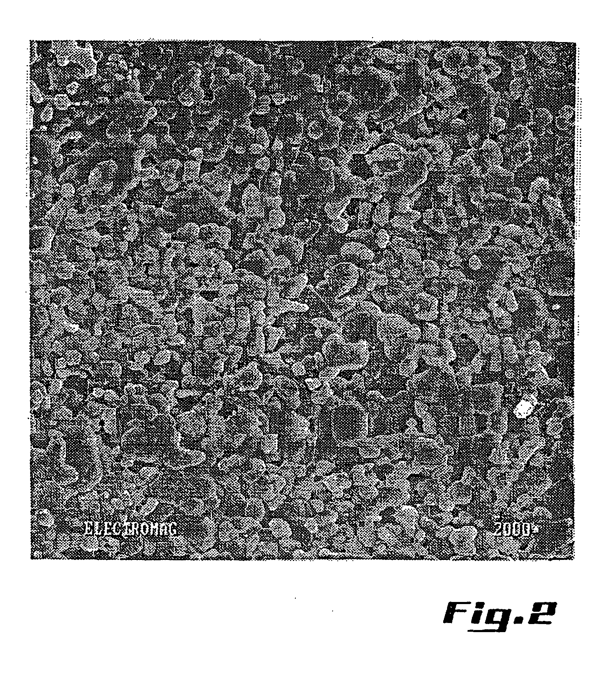

Usuellement, tous les capteurs de gaz réalisés par évaporation sous vide de couches sensibles, telles que les oxydes métalliques semi-conducteurs ou les semi-conducteurs organiques (phtalocyanine), sont réalisés sur des substrats dont la surface est la plus parfaite possible. Ces surfaces sont donc parfaitement lisses, débarrassées de toutes impuretés et dans certains cas, les électrodes (2) sont même enterrées dans le substrat (1), de manière à obtenir un film (3) parfait sur l'ensemble de la surface comme illustré à la figure 1a).

Les films obtenus par évaporation sous vide sur de tels substrats ont une structure ordonnée dont la surface active est limitée à la surface géométrique réelle comme illustré à la figure 1b). Ceci empêche les gaz d'accéder dès les premiers instants à tous les types de sites réactionnels des molécules de phtalocyanine. En effet les molécules de phtalocyanines prennent une structure en chevron (3) où les couches supérieures bloquent pour ainsi dire l'accès du gaz aux couches inférieures et donc aux sites actifs périphériques des molécules. Ainsi, lors de l'adsorption primaire, les sites périphériques des couches inférieures ne contribuent pas ou peu au changement de la résistance ou de la conductivité du semi-conducteur.

Les figures 1c) et 1d) illustrent la structure cristallographique de la phtalocyanine de cuivre de type $\alpha$. Comme on peut le constater sur la figure 1c l'atome de cuivre Cu est situé au centre et les quatre atomes d'azote à la périphérie de la molécule. La distance entre deux atomes de cuivre superposés est de 3,79 Å et entre deux atomes d'azote superposés est de 3,40 Å. Puisque l'atome de métal, en occurrence le cuivre, se trouve au centre, le site accepteur se trouve au centre, alors que les sites donneurs, formés par les atomes d'azote sont situés en périphérie. Les différentes couches qui forment la molécule de phtalocyanine de cuivre étant bien ordonnées, on retrouve la même disposition des atomes dans chaque couche. Même des modifications cristallographiques menant à d'autres structures de couche, comme par exemple celle de la phtalocyanine de cuivre de type $\beta$, illustrée à la figure 1d), ne modifient pas l'accessibilité aux sites donneurs et accepteurs.

L'invention consiste donc à mettre en oeuvre des moyens qui permettent de déstabiliser la cristallisation des couches de manière à permettre aux gaz d'atteindre tant les sites accepteurs que donneurs des molécules. Donc, aussi bien les sites centraux au niveau de l'atome métallique que les sites périphériques au niveau des atomes d'azote, devraient être accessibles. De plus, l'invention a pour but de réduire la perte de sensibilité dans le temps que subissent les éléments semi-conducteurs.

Pour atteindre son objectif, l'invention prend le contre-pied total de ces principes communément admis.

L'invention consiste notamment à déstabiliser considérablement la cristallisation du film de phtalocyanine lorsque celui se solidifie sur le substrat. Une première façon de déstabiliser la cristallisation du film de phtalocyanine est d'utiliser des substrats à la surface desquels on crée volontairement un certain nombre de défauts de manière à obtenir sur ces substrats une couche sensible, dont la cristallisation aléatoire est discontinue et non uniforme. Le caractère aléatoire de la cristallisation est défini par la nature, la rugosité et le prétraitement superficiel du substrat. La texture d'orientation des cristaux de la couche appliquée sur un substrat rugueux n'aura dès lors plus d'orientation préférentielle autrement obtenue sur un substrat lisse, mais elle sera constituée d'agrégats polycristallins présentant des cristallisations aléatoires.

La surface non uniforme du substrat est par exemple obtenue par frittage de poudres d'alumine ($Al_2O_3$) à des classes de poudres de granulométrie différente. Les substrats en alumine sont par exemple obtenus par frittage de poudres dont la granulométrie se situe dans une gamme comprise entre 1 et 3 µm. On peut également utiliser des poudres d'une classe granulométrique de 1 à 8 µm.

Ainsi, des couches sensibles de phtalocyanine sont déposées sur des substrats en alumine munis d'électrodes en or sérigraphiées, à partir de pâtes constituées par des paillettes d'or, dont la cohésion est assurée par un liant organique. Ces pâtes sont recuites à haute température (T>800°C). De même, les électrodes présentent une rugosité, ce qui confère à l'ensemble ainsi réalisé une rugosité importante qui peut être mesurée et visualisée par microscopie électronique.

Ainsi, par exemple, les rugosités moyennes, mesurées sur deux types de substrat en alumine différents, sont comprises entre 0.4 et 0.7 µm pour l'alumine et de l'ordre de 0.2 µm pour les électrodes.

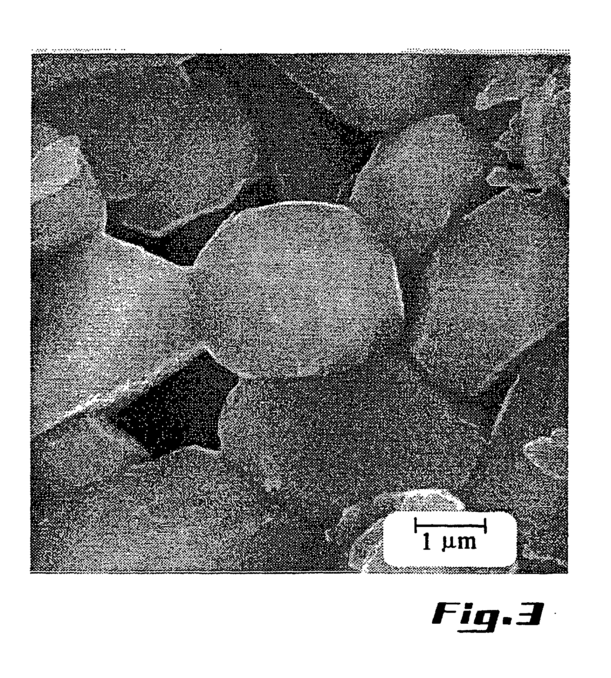

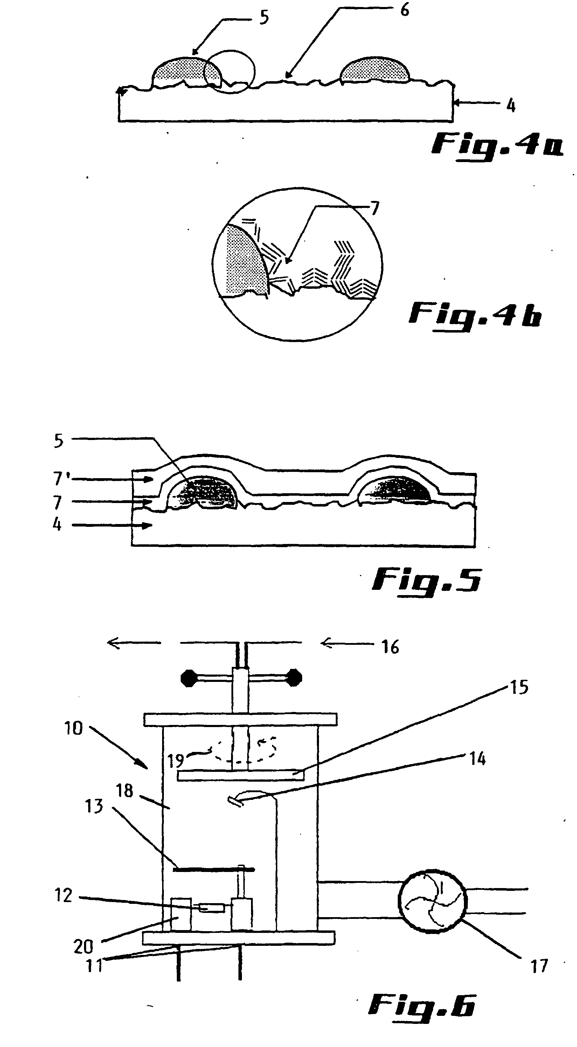

Les figures 2 et 3 illustrent la surface rugueuse et le profil des grains qui est préservé après frittage du substrat. Ces figures ont été obtenues par microscopie électronique à balayage. La figure 3 représente un détail de la figure 2 cinq fois agrandi. Comme on peut le constater sur ces figures, la surface du substrat ainsi préparée est complètement perturbée et ne présente aucune planéité.

Sur ces substrats ainsi préparés, est effectué le dépôt de phtalocyanine en couches minces (quelques centaines à quelques milliers d'angströms) afin de former une couche totalement désordonnée à grande sensibilité et présentant en surface des sites donneurs et accepteurs. En effet, si l'épaisseur de la couche devient trop importante, elle s'organise, ce qui fait perdre le bénéfice de la surface rugueuse et diminue sa sensibilité. On revient dans ce cas à une situation semblable au substrat lisse.

La figure 4 illustre un exemple d'un élément formé de semi-conducteurs obtenu par application du procédé suivant l'invention. Le substrat 4 comporte une surface 6 rugueuse, sur laquelle sont appliquées des électrodes 5 ainsi que la couche de phtalocyanine 7 qui maintenant ne possède plus ce caractère uniforme. La couche mince ainsi obtenue sur substrat rugueux est totalement désordonnée, et forme un «agrégat polycristallin» sur le substrat.

La figure 5 montre un exemple où la couche 7 désorganisée de phtalocyanine est trop épaisse et est ainsi recouverte d'une couche organisée 7' qui anéantit donc le caractère rugueux du substrat 4.

Avant d'être déposée sur le substrat, la phtalocyanine doit être soigneusement purifiée afin d'être débarrassée de toutes impuretés qui risqueraient de sublimer lors de l'évaporation sous vide. Cet aspect est très important pour la reproductibilité des capteurs réalisés.

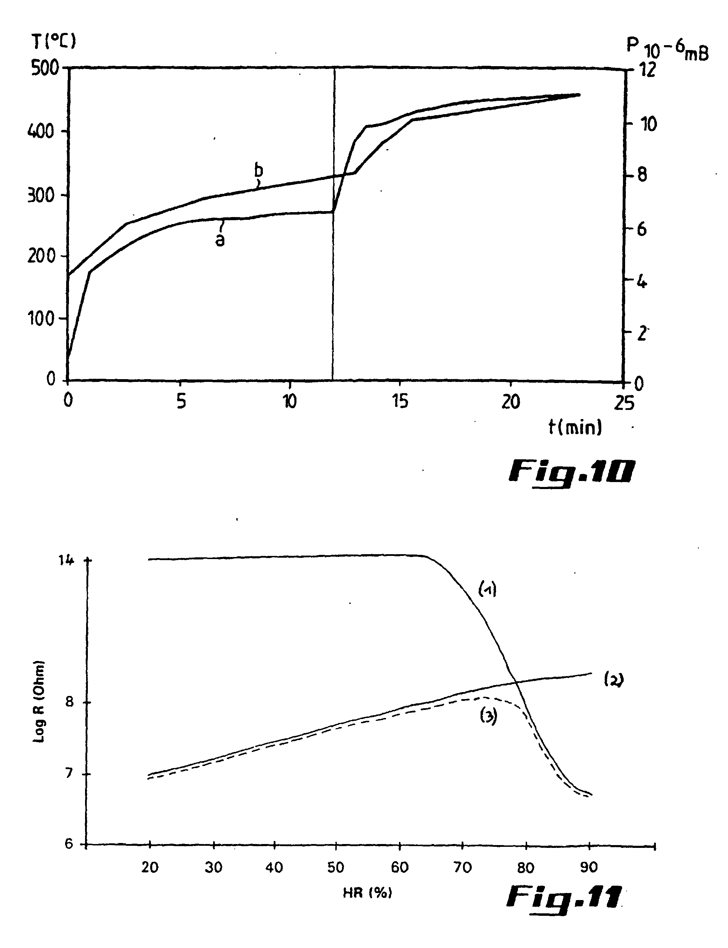

L'utilisation de substrats à base de poudres frittées telle l'alumine, a néanmoins l'inconvénient de présenter de nombreux pores et interstices entre les grains d'alumine. Lorsque l'humidité de l'atmosphère ambiante augmente aux environs de 70 % d'humidité relative, ces pores peuvent être le siège de condensations capillaires. Dans ces conditions, la résistance électrique du substrat en alumine diminue fortement jusqu'à devenir inférieure à celle de la couche sensible, comme illustré à la figure 11, qui montre l'évolution de la résistance (Log R) électrique des différents composants en fonction de l'humidité relative. La courbe (1) illustre la chute de la résistance du substrat, la courbe (2) montre la résistance de la couche de phtalocyanine et la courbe (3) la résistance de l'ensemble substrat avec la couche de phtalocyanine. Puisque la résistance du substrat et celle de la couche de phtalocyanine sont disposées en parallèle et c'est dans ce cas la plus faible en l'occurrence celle du substrat qui devient déterminante, comme l'illustre la courbe (3).

Cette influence de l'humidité de l'atmosphère peut être évitée en imprégnant, préalablement à l'application de la couche de phtalocyanine, le substrat d'alumine à l'aide de substances hydrofuges susceptibles de polymériser dans les pores résiduels qui sont présents de l'alumine frittée. La condensation capillaire ultérieure peut ainsi être sensiblement réduite. La substance hydrofuge, permettant de boucher les pores du substrat, est par exemple constituée de polysiloxane.

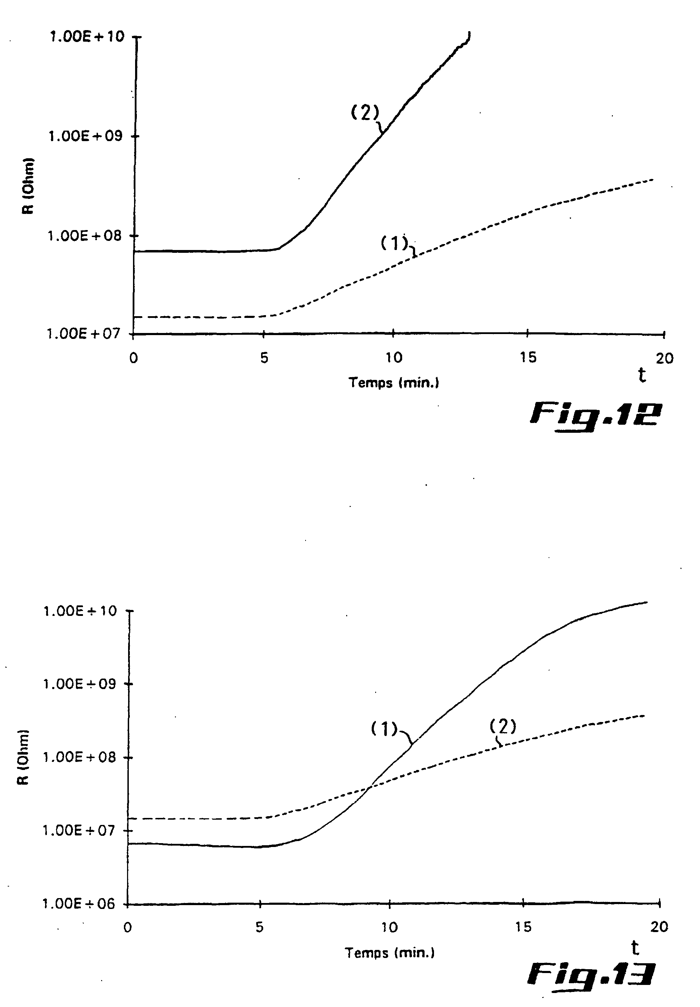

Un effet surprenant de cette imprégnation réside dans le fait que les couches semi-conductrices déposées sur ces substrats traités, présentent une sensibilité aux feux sans flamme beaucoup plus importante. Cet effet peut s'expliquer par le fait que les polysiloxanes enrobent également les grains d'alumine présents en surface. Cette modification de la nature de la surface favorise une cristallisation particulière de la phtalocyanine qui conduit à présenter un nombre plus important de sites réactionnels sensibles à l'action des gaz émis par les feux sans flamme. Cet effet est illustré à la figure 12 où le courbe (1) respectivement (2) illustre l'évolution de la résistance en fonction du temps (t) en présence d'un feu sans flamme pour un détecteur sur un substrat non imprégné (1) respectivement imprégné (2).

Suivant une forme de réalisation alternative du procédé suivant l'invention, il est également possible de partir d'un substrat lisse connu et d'attaquer sa surface par des bains d'acide, comme par exemple de l'acide fluorhydrique (HF) lorsqu'il s'agit d'un substrat en verre ou en silicium. On peut également y appliquer, par exemple par laser, des rainures pour rendre la surface rugueuse.

La figure 6 illustre un exemple d'un dispositif pour la mise en oeuvre du procédé suivant l'invention. Le dispositif 10 comporte une entrée 11 pour y appliquer un courant électrique. Le dispositif est agencé pour permettre une évaporation sous vide et comporte à cette fin une cloche 18 sous laquelle sont placés divers composants. Une pompe 17 permet de pomper l'air sous la cloche afin d'y créer un vide de préférence de l'ordre de $10^{-4}$ Pa.

Sous la cloche 18 est logé un support 20 qui porte la source 12 de phtalocyanine. Le support comporte des moyens de chauffage par exemple formés par une résistance électrique reliée à l'entrée 11. Au dessus de la source 12 se trouve un obturateur 13, permettant de couper l'apport de phtalocyanine évaporée fourni par la source 12. Un oscillateur à quartz 14 également placé sous la cloche permet de mesurer la quantité de phtalocyanine déposée lors de l'évaporation. En effet la fréquence de l'oscillateur change en fonction de l'épaisseur de la couche appliquée.

Les substrats 15 sont fixés sur un porte-substrat 19, également disposé sous la cloche 18. Afin de maintenir le porte-substrat à une température prédéterminée il est prévu une conduite 16 de fluide caloporteur, qui est reliée au porte-substrat. Le cas échéant le porte-substrat 19 est entraîné en rotation à l'aide d'un moteur (non illustré). Ceci permet de répartir de façon égale la phtalocyanine sur l'ensemble du substrat.

Avant d'être recouvert d'une couche de phtalocyanine, le substrat est nettoyé afin de le débarrasser de toute impureté qui risquerait d'interférer avec la couche de phtalocyanine. Ce nettoyage est par exemple réalisé à l'aide d'ondes ultrasons, qui permettent de décoller les impuretés qui sont restées agglomérées sur le substrat. Le nettoyage peut également être réalisé à l'aide de solvant comme par exemple du trichloroéthylène, de l'acétone ou de l'acide.

L'évaporation sous vide est réalisée en portant une nacelle constituant la source 12 à une température de l'ordre de 350°C par effet Joule sous un vide de l'ordre de $10^{-4}$ Pa. Par réglage de la température de la nacelle il est possible de réguler la vitesse d'évaporation. La figure 10 illustre l'évolution de la pression partielle $P_{(b)}$ dans le temps (min) de la couche de phtalocyanine en fonction de la température $T_{(a)}$ de la nacelle. On constate ainsi qu'à une température située entre 290° et 400°C l'évaporation a lieu. En effet plus la température de la source sera élevée, plus de matière s'évaporera. La vitesse conditionne donc également la cristallisation du film de phtalocyanine déposé sur le substrat. Les meilleurs résultats sont obtenus à vitesse de dépôt réduite. Ainsi, par exemple, un film d'une épaisseur de 500 Å est obtenu avec une durée d'évaporation effective de l'ordre de 10 minutes avec une température de 350°C et une pression de 10⁻⁴ Pa. Ceci correspond à une vitesse de dépôt allant de quelques molécules à une dizaine par minute selon leur orientation dans le réseau cristallin. Le temps pendant lequel le dépôt a lieu est géré par le temps d'ouverture de l'obturateur 13.

L'évaporateur sous vide permet de faire passer la substance à évaporer par sublimation à l'état gazeux et donc d'obtenir le caractère aléatoire désiré du dépôt.

La quantité de phtalocyanine déposée et donc, dans une certaine mesure l'épaisseur de la couche appliquée, détermineront la sensibilité du capteur utilisant l'élément formé de semi-conducteurs. Ainsi une couche équivalente à une épaisseur de 100 Å permettra de détecter la fumée d'une seule cigarette, alors qu'une épaisseur de 2500 Å sera la moins sensible aux fluctuations ambiantes. La quantité de matière déposée par cm² de substrat est de 1,4 µg et 35 µg pour une couche de 100 Å respectivement 2500 Å. Plus la couche sera épaisse, plus faible sera la sensibilité du capteur.

La température du porte-substrat (15) présente également une importance considérable sur la cristallisation des couches. Cette température est comprise entre - 30 et + 80° C selon le type de substrat utilisé. Ainsi, par exemple, avec une température de substrat réglée à - 20°C, on obtient des couches amorphes qui présentent une excellente sensibilité puisque les molécules se déposent de manière complètement désordonnée. Elles présentent ainsi des orientations différentes à l'action des gaz, orientations tout à fait propices à l'obtention d'une couche de phtalocyanine présentant aussi bien des sites accepteurs que donneurs.

En effet lorsque le substrat est refroidi à une température inférieure à 0° C, l'énergie cinétique des molécules de phtalocyanine provenant de l'évaporation de la source 12, est pratiquement immédiatement prélevée lorsque les molécules entrent en contact avec le substrat. Ceci provoque que les molécules restent figées dans leur position d'arrivée et ne se réorientent pas dans un réseau cristallin. On obtient donc une couche amorphe au lieu d'un cristal ordonné. Dans cette couche amorphe se présentent toutes les orientations et donc les différents types de site.

La figure 13 illustre la différence de sensibilité obtenue par un capteur obtenue par refroidissement du substrat lors du dépôt de la couche sensible. La valeur résistive R d'un capteur (courbe (1)) obtenue par refroidissement du substrat, monte plus rapidement dans le temps t en présence d'un feu sans flamme, que celle d'un capteur (courbe (2)) obtenue à température ambiante.

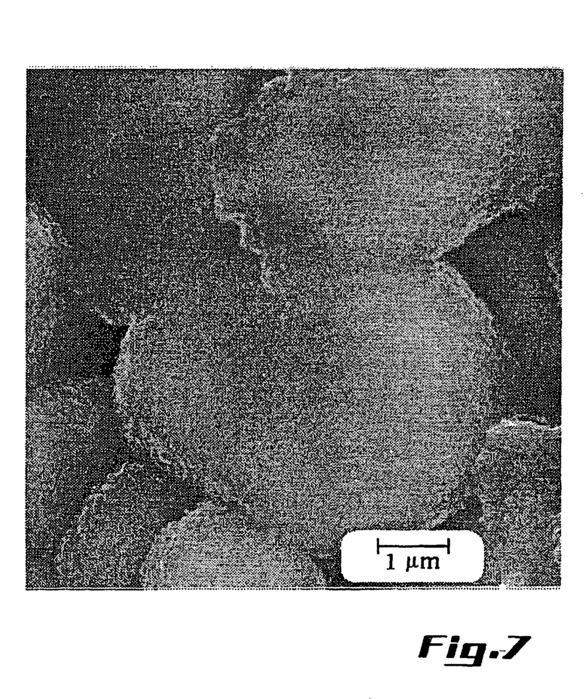

La photo reprise en figure 7 montre le résultat obtenu par application du procédé suivant l'invention et illustre en même temps la différence par rapport à la technique connue. Comme repris dans cette photo, chaque grain d'alumine est couvert par des micro-agrégats polycristallins séparés les uns des autres, qui se présentent sous la forme d'une mousse floconneuse, très aérée, poreuse, de grande surface spécifique particulièrement favorable au comportement du capteur. Cette grande surface spécifique permet un échange favorable avec les gaz ambiants et augmente ainsi la sensibilité du capteur.

A ce stade, on obtient une couche sensible formée d'agrégats polycristallins dont les caractéristiques après fabrication sont les suivantes :

| r ambiance | 0.97 < r < 1.06 |
| r feu avec flamme ( r FAF ) | 0.60 < r < 0.75 |
| r feu sans flamme ( r FSF ) | 1.50 < r < 3 |

Toutefois , ces capteurs bien que présentant une très bonne sensibilité (r FAF <<< r ambi <<< r FSF), peuvent présenter un défaut de stabilité dans le temps : ainsi après 6 mois , les ratios obtenus sont les suivants :

| r ambiance | 0.97 < r < 1.06 |
| r feu avec flamme ( r FAF ) | 0.75 < r < 0.85 |
| r feu sans flamme ( r FSF ) | 1.20 < r < 1.40 |

Il faut noter qu'au cours du temps, les ratios en feu se rapprochent progressivement de 1, ce qui signifie qu'on observe une légère perte de sensibilité au feu. Cette évolution des ratios s'accompagne d'une montée en résistance des capteurs ce qui devient gênant pour l'utilisation avec des électroniques classiques.

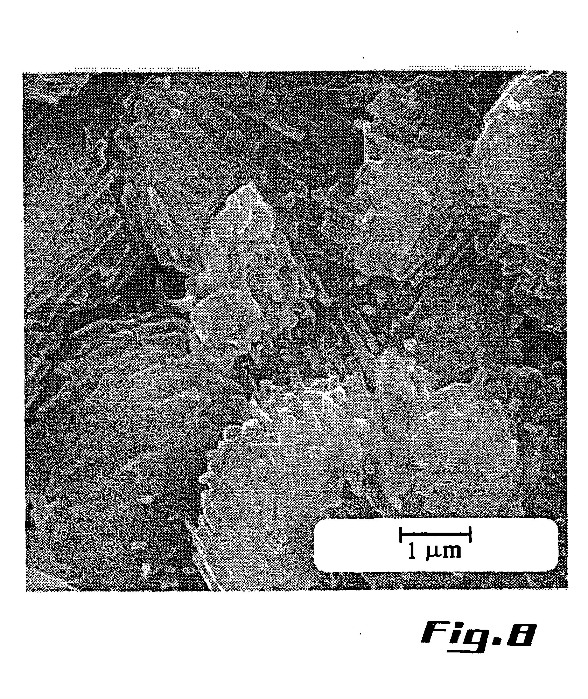

C'est pourquoi, pendant la fabrication et/ou après cette fabrication, les capteurs subiront différents traitements en vue de les stabiliser à long terme. Parmi ces traitements, on distingue le traitement thermique post-fabrication. Dans ce traitement les couches de phtalocyanine déposées par évaporation sous vide sur ces substrats sont ensuite soumises à un traitement thermique (par exemple 8 heures à 150°C.) de manière à stabiliser la structure. On observe, en effet, que ces traitements thermiques diminuent quelque peu la sensibilité des films formés, mais permettent de la maintenir dans le temps en figeant la cristallisation. La cristallisation obtenue dans ces conditions est reproduite sur la photo reprise en figure 8 où des cristallisations plus prononcées et orientées dans toutes les directions sont clairement observées.

L'utilisation de capteurs dont le substrat a été refroidi lors de la fabrication présent les caractéristiques suivantes :

| r ambiance | 097 < r < 1.06 |
| r feu avec flamme ( r FAF ) | 0.70 < r < 0.85 |
| r feu sans flamme ( r FSF ) | 1.30 < r < 1.50 |

On ne remarque plus par la suite d'évolution notable de la sensibilité au feu de la couche sensible.

L'ensemble des résultats décrits ci-dessus a été obtenu sur des substrats d'alumine. Des résultats semblables peuvent être obtenus sur d'autres substrats tels que par exemple des substrats en verre ou silicium, dont la surface a été rendue poreuse. Cette opération peut, par exemple, aisément être réalisée par anodisation électrochimique de plaques de silicium (Wafers) dans des solutions d'acide fluorhydrique (HF). Ces plaques sont ensuite soumises à des traitements d'oxydation de manière à former une couche d'oxyde ($SiO_2$) ou sont soumises à un autre dépôt isolant tel que le nitrure de silicium ($Si_3N_4$) ou de l'$Al_2O_3$. L'application d'une couche d'oxyde ou d'un isolant est nécessaire dû aux propriétés semi-conductrices du silicium. Il faut dès lors isoler le substrat en silicium de la couche de phtalocyanine appliquée. Les substrats ainsi réalisés peuvent alors recevoir la couche de phtalocyanine qui, étant donné la rugosité de la surface réalisée, se présente également sous forme d'agrégats polycristallins

Outre l'augmentation de sensibilité du film par traitement du substrat, une autre façon de procéder consiste à déformer le réseau cristallin du film en évaporant simultanément un mélange de phtalocyanines différentes. Ainsi, on peut introduire dans la nacelle chauffée, qui constitue la source de matière dans l'évaporateur sous vide, un mélange de phtalocyanines de préférence pures, par exemple de cuivre (95% en poids) et de cobalt (5% en poids). Lors d'un tel dépôt, le film sensible se forme graduellement en intercalant des molécules de phtalocyanine de cobalt dans le réseau de la phtalocyanine de cuivre. La faible différence de forme et de dimension de ces molécules par rapport à celles de phtalocyanine de cuivre est suffisante pour déstabiliser le réseau et donner lieu à une croissance polycristalline. La sensibilité des films ainsi obtenue est largement accrue.

| r ambiance | 097 < r < 1.06 |
|---|---|
| r feu avec flamme ( r FAF ) | 0.50 < r < 0.75 |
| r feu sans flamme ( r FSF ) | 1.60 < r < 3 |

De tels mélanges peuvent être réalisés à partir d'autres phtalocyanines hydrogénées ou métalliques, par exemple de nickel, de fer, de zinc, de plomb, etc... Plus la molécule co-évaporée est différente, plus la déstabilisation est importante. Chaque mélange impose toutefois dans chaque cas une étude précise de proportion et de vitesse d'évaporation.

Mis à part les mélanges de phtalocyanines il est également possible d'utiliser des phtalocyanines de métaux différents comme par exemple des phtalocyanines de fer, de plomb, de nickel ou de cobalt.

La comparaison des résultats obtenus dans ces conditions (substrats rugueux, codépôt, traitement thermique) montre que les agrégats formés sont complètement différents.

Cette cristallisation est notamment déterminée par le substrat dont les surfaces à l'échelle microscopique présentent des angles différents les uns des autres, et vraisemblablement induisent un phénomène de croissance épitaxique selon les orientations des cristaux du substrat.

Ce type de résultat peut également être obtenu sur d'autres substrats que l'alumine. Ils doivent toutefois remplir un certain nombre de conditions. La résistance électrique du substrat doit être nettement plus élevée que celle des couches sensibles (au moins un facteur 100)

Les capteurs à base de phtalocyanine réalisés par application du procédé suivant l'invention peuvent également être utilisés en domotique. On travaille alors par seuils et plus par ratios. Les capteurs à usage domotique servent par exemple au conditionnement de l'air ambiant. Au delà ou en deçà du seuil de résistance fixé au préalable, le capteur deviendra actif et déclenchera un signal pour mettre en marche par exemple un système de ventilation, de purification ou déclencher un signal d'alarme. Comme illustré à la figure 9 les évolutions d'ambiance des capteurs se situent en atmosphère ambiante normale dans une plage située entre $1.10^7$ et $8.10^7$ Ω. Dès lors tout écart supérieur ou inférieur à ces valeurs entraînera la production d'un signal. Ainsi par exemple la fumée d'une cigarette fera monter la résistance à une valeur au delà de $8.10^7$ Ω et un polluant comme du chlore ou un NOx fera chuter la résistance en dessous de $10^7$ Ω.

**Revendications**

**1.** Procédé de fabrication d'un élément formé de semi-conducteur(s) permettant la détection d'incendie, suivant lequel on applique par évaporation sous vide une couche (3, 7) de phtalocyanine sur un substrat isolant (1;4;15), laquelle couche est solidifiée de telle façon à obtenir en surface de l'élément semi-conducteur des sites accepteurs et des sites donneurs dans une proportion telle pour permettre la détection de feu avec et sans flamme, **caractérisé en ce que** durant l'application de ladite couche de phtalocyanine la température du substrat est réglée à une température située entre -30 et +80°C, et **en ce que** l'épaisseur de la couche de phtalocyanine appliquée sur le substrat est située entre 100 Å et 2500 Å, laquelle couche est solidifiée sur le substrat qui possède une surface irrégulière et rugueuse afin d'obtenir une couche de phtalocyanine irrégulière constituée d'agrégats polycristallins présentant des cristallisations aléatoires.

**2.** Procédé de fabrication d'un élément formé de semi-conducteur(s) suivant la revendication 1, **caractérisé en ce que** lors de l'évaporation sous vide le substrat est refroidi à une température inférieure à 0°C et pouvant atteindre - 30°C, de préférence à - 20°C.

3. Procédé de fabrication d'un élément formé de semi-conducteurs(s) suivant la revendication 1 ou 2, **caractérisé en ce que** l'évaporation sous vide est réalisée en portant une source (12) de phatalocyanine à une température d'environ 350°C sous un vide d'environ $10^{-4}$ PA durant une période de temps d'environ 10 minutes.

4. Procédé de fabrication d'un élément formé de semi-conducteur(s) suivant la revendication 3, **caractérisé en ce qu'**après application de la couche par évaporation sous vide le substrat et la couche sont soumis à un traitement thermique pour les stabiliser.

5. Procédé de fabrication d'un élément formé de semi-conducteur(s) suivant l'une des revendications 1 à 3, **caractérisé en ce qu'**en tant que couche de phtalocyanine un mélange de phtalocyanine de métaux différents est appliqué.

6. Procédé de fabrication d'un élément formé de semi-conducteur(s) suivant l'une des revendications 1 à 5, **caractérisé en ce que** la quantité de phtalocyanine déposée sur ledit substrat est comprise entre 1,4 $\mu$g/cm$^2$ et 35 $\mu$g/cm$^2$.

7. Procédé de fabrication d'un élément formé de semi-conducteur(s) suivant une des revendications 1 à 6, **caractérisé en ce que** pour le substrat, un substrat en alumine, obtenu par frittage de poudres d'oxyde d'alumine appartenant à des poudres de classes granulométriques différentes, est utilisé.

8. Procédé de fabrication d'un élément formé de semi-conducteur(s) suivant l'une des revendications 1 à 6, **caractérisé en ce que** le substrat utilisé est un substrat à base de poudres frittées, lequel substrat est imprégné préalablement à l'application de la phtalocyanine, d'une substance hydrofuge susceptible de polymériser dans les pores résiduels présents après frittage des poudres.

9. Procédé de fabrication d'un élément formé de semi-conducteur(s) suivant la revendication 8, **caractérisé en ce que** ladite substance hydrofuge est constituée de polysiloxane.

10. Procédé de fabrication d'un élément formé de semi-conducteur(s) suivant l'une des revendications 1 à 6, **caractérisé en ce que** pour le substrat, un substrat en silicium couvert d'une couche isolante dont la surface a été rendue rugueuse, est utilisé.

11. Procédé de fabrication d'un élément formé de semi-conducteur(s) suivant la revendication 10, **caractérisé en ce que** la surface du substrat en silicium est rendue rugueuse par anodisation éléctrochimique d'une plaque de silicium dans une solution d'acide fluorhydrique et qui est ensuite soumise à une oxydation.

12. Détecteur d'incendie comprenant un élément formé de semi-conducteur(s) obtenu par application du procédé suivant l'une des revendications 1 à 11, où la couche de phtalocyanine est solidifiée sur un substrat qui possède une surface irrégulière et rugueuse, de telle façon à ce que le ratio r de la couche de phtalocyanine de l'élément formé de semi-conducteur(s), est inférieur ou égal à 0.85 pour la détection d'un feu avec flamme et supérieur ou égal à 1,25 pour la détection d'un feu sans flamme, où le ratio r est le quotient entre la résistance R(t) du détecteur à un temps t et la résistance R(t-15) du détecteur à un temps t-15 secondes.

**Patentansprüche**

1. Verfahren zur Herstellung eines aus einem Halbleiter/Halbleitern gebildeten Elements, das die Entdeckung eines Brands ermöglicht, demgemäß eine Phtalocyaninschicht (3, 7) mittels Vakuumaufdampfens auf ein isolierendes Substrat (1; 4; 15) aufgebracht wird, wobei die Schicht derart verfestigt wird, dass auf der Oberfläche des Halbleiterelements Akzeptor- und Donnatororte in einem solchen Verhältnis vorliegen, dass das Entdecken von Feuer mit und ohne Flamme möglich ist, **dadurch gekennzeichnet, dass** während des Aufbringens der Phtalocyaninschicht die Temperatur auf eine Temperatur zwischen -30 °C und +80 °C geregelt ist und **dadurch, dass** die Dicke der auf das Substrat aufgebrachten Phtalocyaninschicht zwischen 100 Å und 2500 Å liegt, wobei die Schicht auf dem Substrat verfestigt ist, welches eine unregelmäßige und unebene Oberfläche aufweist, um eine unregelmäßige Phtalocyaninschicht zu erhalten, welche polykristalline Aggregate umfasst, die Zufallskristallisationen aufweisen.

2. Verfahren zur Herstellung eines aus einem Halbleiter/Halbleitern gebildeten Elements nach Anspruch 1, **dadurch gekennzeichnet, dass** das Substrat während des Vakuumaufdampfens auf eine Temperatur unter 0 °C abgekühlt wird, -30 °C erreichen kann und vorzugsweise auf -20 °C abgekühlt wird.

3. Verfahren zur Herstellung eines aus einem Halbleiter/Halbleitern gebildeten Elements nach Anspruch 1 oder 2, **dadurch gekennzeichnet, dass** das Vakuumaufdampfen ausgeführt wird, indem eine Phtalocyaninquelle (12) bei einem Unterdruck von

ungefähr $10^{-4}$ Pa während eines Zeitraums von ungefähr 10 Minuten auf eine Temperatur von ungefähr 350 °C gebracht wird.

4. Verfahren zur Herstellung eines aus einem Halbleiter/Halbleitern gebildeten Elements nach Anspruch 3, **dadurch gekennzeichnet, dass** im Anschluss an das Aufbringen der Schicht durch Vakuumaufdampfen das Substrat und die Schicht zur Stabilisierung einer Wärmebehandlung unterzogen werden.

5. Verfahren zur Herstellung eines aus einem Halbleiter/Halbleitern gebildeten Elements nach einem der Ansprüche 1 bis 3, **dadurch gekennzeichnet, dass** als Phtalocyaninschicht eine Mischung aus Phtalocyanin und verschiedenen Metallen aufgebracht wird.

6. Verfahren zur Herstellung eines aus einem Halbleiter/Halbleitern gebildeten Elements nach einem der Ansprüche 1 bis 5, **dadurch gekennzeichnet, dass** die auf das Substrat aufgebrachte Menge zwischen 1,4 μg/cm$^2$ und 35 μg/cm$^2$ liegt.

7. Verfahren zur Herstellung eines aus einem Halbleiter/Halbleitern gebildeten Elements nach einem der Ansprüche 1 bis 6, **dadurch gekennzeichnet, dass** für das Substrat ein Aluminiumsubstrat verwendet wird, das durch Sintern von Aluminiumoxidpulvern, welche Pulvern verschiedener granulometrischer Klassen angehören, erhalten wird.

8. Verfahren zur Herstellung eines aus einem Halbleiter/Halbleitern gebildeten Elements nach einem der Ansprüche 1 bis 6, **dadurch gekennzeichnet, dass** das verwendete Substrat ein Substrat auf der Basis gesinterter Pulver ist, wobei das Substrat vor der Aufbringung des Phtalocyanins mit einer Feuchtigkeit abweisenden Substanz getränkt wird, welche in den nach dem Sintern der Pulver verbliebenen Poren polymerisieren kann.

9. Verfahren zur Herstellung eines aus einem Halbleiter/Halbleitern gebildeten Elements nach Anspruch 8, **dadurch gekennzeichnet, dass** die Feuchtigkeit abweisende Substanz aus Polysiloxan gebildet ist.

10. Verfahren zur Herstellung eines aus einem Halbleiter/Halbleitern gebildeten Elements nach einem der Ansprüche 1 bis 6, **dadurch gekennzeichnet, dass** für das Substrat ein Siliziumsubstrat verwendet wird, das von einer isolierenden Schicht bedeckt ist, deren Oberfläche aufgeraut worden ist.

11. Verfahren zur Herstellung eines aus einem Halbleiter/Halbleitern gebildeten Elements nach Anspruch 10, **dadurch gekennzeichnet, dass** die Oberfläche des Siliziumsubstrats durch elektrochemisches Anodisieren einer Siliziumplatte in einer Fluorwasserstoffsäurelösung aufgeraut wird, wobei die Platte anschließend einer Oxidierung unterworfen wird.

12. Feuerwarnmelder, umfassend ein aus einem Halbleiter/Halbleitern gebildetes Element, das unter Anwendung eines Verfahrens nach einem der Ansprüche 1 bis 11 erhalten wurde, wobei die Phtalocyaninschicht auf einem Substrat verfestigt ist, das eine unregelmäßige und unebene Oberfläche aufweist, derart, dass das Verhältnis r der Phtalocyaninschicht des aus einem Halbleiter/Halbleitern gebildeten Elements für die Entdeckung eines Feuers mit Flamme kleiner gleich 0,85 ist bzw. für die Entdeckung eines Feuers ohne Flamme größer gleich 1,25 ist, wobei das Verhältnis r der Quotient aus dem Widerstand R(t) des Melders zu einem Zeitpunkt t und dem Widerstand R(t-15) des Melders zu einem Zeitpunkt t-15 Sekunden ist.

**Claims**

1. A method for manufacturing a semiconductor(s) element enabling a detection of a fire, according to which a phthalocyanine layer (3,7) is applied under vacuum evaporation on an insulating substrate (1; 4;15), said layer being solidified such as to obtain on a surface of the semiconductor element acceptor and donor sites in such a proportion as to enable the detection of fire with and without flame, **characterised in that** during application of the phthalocyanine layer the temperature of the substrate is set at a temperature situated between -30° and +80°C, and **in that** the thickness of the phthalocyanine layer applied on the substrate is situated between 100 Å and 2500 Å, which layer is solidified on the substrate having an irregular and rough surface in order to obtain an irregular phthalocyanine layer constituted of polycrystalline aggregates presenting random crystallisations.

2. A method for manufacturing a semiconductor(s) element as claimed in claim 1, **characterised in that** during vacuum evaporation the substrate is cooled at a temperature lower than 0°C and which could reach -30°C, preferably -20°C.

3. A method for manufacturing a semiconductor(s) element as claimed in claim 1 or 2, **characterised in that** the vacuum evaporation is realised by bringing a phthalocyanine source (12) at a temperature of substantially 350°C under vacuum of substantially $10^{-4}$ Pa during a time period of approximately 10 minutes.

**4.** A method for manufacturing a semiconductor(s) element as claimed in claim 3, **characterised in that** after application of the layer under vacuum evaporation, the substrate and the layer are submitted to a thermal processing for their stabilisation.

**5.** A method for manufacturing a semiconductor(s) element as claimed in any one of the claims 1 to 3, **characterised in that** a phthalocyanine mixture of different metals is applied as phthalocyanine layer.

**6.** A method for manufacturing a semiconductor(s) element as claimed in any one of the claims 1 to 5, **characterised in that** the phthalocyanine quantity applied on said substrate is comprised between 1.4 $\mu g/cm^2$ and 35 $\mu g/cm^2$

**7.** A method for manufacturing a semiconductor(s) element as claimed in any one of the claims 1 to 6, **characterised in that** a substrate of alumina obtained by sintering of alumina oxide powders belonging to powders of different granulometric classes is used for the substrate.

**8.** A method for manufacturing a semiconductor(s) element as claimed in any one of the claims 1 to 6, **characterised in that** the used substrate is a substrate based on sintered powders, which substrate is impregnated, before said application of the phthalocyanine, with a water-repellent substance suitable to polymerise within the residual pores, present after sintering of the powders.

**9.** A method for manufacturing a semiconductor(s) element as claimed in claim 8, **characterised in that** said water-repellent substance is polysiloxane.

**10.** A method for manufacturing a semiconductor(s) element as claimed in any one of the claims 1 to 6, **characterised in that** a silicon substrate covered by an insulating layer, the surface of which having been rendered rough, is used for the substrate.

**11.** A method for manufacturing a semiconductor(s) element as claimed in claim 10, **characterised in that** the surface of the silicon substrate is made rough by electrochemical anodising of a silicon plate in a hydrofluoric acid solution and which is thereafter submitted to an oxidation.

**12.** A fire detector comprising a semiconductor(s) element obtained by application of the method as claimed in any one of the claims 1 to 11, wherein the phthalocyanine layer is solidified on a substrate having an irregular and rough surface, in such a manner that the ratio of the phthalocyanine layer of the semiconductor(s) element is lower or equal to 0.85 for a detection of a fire with a flame or equal to 1.25 for a detection of a fire without flames, wherein the ratio r is a quotient between a detector resistance $R(t)$ at a time t and a detector resistance $R(t-15)$ at t-15 seconds.

Fig.1a

Fig.1b

α -CuPc

$3{,}40\ \overset{\circ}{A}$

$b = 3{,}79\ \overset{\circ}{A}$

$a = 23{,}9\ \overset{\circ}{A}$

Fig.1c

β -CuPc

$3{,}40\ \overset{\circ}{A}$

$b = 4{,}79\ \overset{\circ}{A}$

$a = 19{,}6\ \overset{\circ}{A}$

Fig.1d

*Fig.2*

*Fig.3*

**Fig.4a**

**Fig.4b**

**Fig.5**

**Fig.6**

**1 μm**

*Fig.7*

Fig.8

Fig.9

EP 0 918 985 B1

**Fig.10**

**Fig.11**

Fig.12

Fig.13